# EUROPEAN PATENT SPECIFICATION

(11) **EP 2 135 924 B1**
(45) Date of publication and mention of the grant of the patent: **23.10.2013**
(21) Application number: 08721696.6
(22) Date of filing: 10.03.2008
(51) Int. Cl.: C10M 115/08, C10M 169/02, C10N 30/08, C10N 40/02, C10N 40/04, C10N 50/10

(54) **GREASE COMPOSITION**
SCHMIERFETTZUSAMMENSETZUNG
COMPOSITION DE GRAISSE

(30) Priority: 08.03.2007 JP 2007058772
(43) Date of publication of application: 23.12.2009
(73) Proprietor: Kyodo Yushi Co., Ltd., Kanagawa 251-8588 (JP)
(72) Inventor: KONDO, Shinya, Fujisawa-shi Kanagawa 251-8588 (JP); NAGUMO, Daigo, Fujisawa-shi Kanagawa 251-8588 (JP)
(74) Representative: Vossius & Partner
(86) International application number: PCT/JP2008/054280
(87) International publication number: WO 2008/108489

(56) References cited:
- WO-A1-2007/037308
- GB-A- 2 255 346
- JP-A- 01 279 996
- JP-A- 04 328 198
- JP-A- 08 165 488
- JP-A- 09 059 661
- JP-A- 09 255 983
- JP-A- 61 155 496
- JP-A- 2003 073 682
- JP-A- 2003 306 687
- JP-A- 2004 123 858
- US-A- 5 604 187
- US-A- 5 607 906
- US-B1- 6 432 888

## Description

The present invention relates to a grease composition and machine elements, and particularly, to a grease composition which is suitably used for rolling bearings and constant-velocity joints for automobile instruments or auxiliaries, and to a rolling bearing, or constant-velocity joints in which the grease composition is filled.

The service life of lubrication units used for rolling and rolling-sliding is associated with fatigue, i.e. flaking. In order to prevent this flaking and prolong the service life, it is required to decrease the frequency of direct contact of both surfaces lubricating with each other. As a method of not contacting both the surfaces each other, a measure is generally taken to increase the viscosity of the lubricating oil, i.e. the base oil in the grease, and to thicken the oil layer.
However, some amount of thickener is needed in order for this effect to be demonstrated. On the other hand, when the amount of the thickener is too high, the property of the grease composition to easily flow into a lubricating unit is impaired, and therefore, a countermeasure thereto is required.
Such a property of the grease composition is strongly required when machine elements to be lubricated are constant-velocity joints, gears or rolling bearings for automobiles.

As greases used for rolling bearings for automobile instruments or auxiliaries, a diurea grease in which the base oil mainly comprises a synthetic hydrocarbon oil and a phenyl ether synthetic oil is used. Among diurea greases, particularly aromatic diurea is often used because of its high temperature resistance.
However, this kind of grease lacks the property to easily flow into the lubricating unit and thus generates a flaking due to insufficiency of lubricant.

On the other hand, as an example of providing the inflow property by a thickener, JP 2979274 B proposes a grease characterized in that a gelling agent is incorporated as an essential ingredient in a base oil comprising more than 50% by weight of ether synthetic oil, which gelling agent comprises at least one of diurea compounds represented by the following general formula:

R²-NHCONH-R¹-NHCONH-R³,

wherein R¹ represents a C₆-C₁₅ divalent aromatic hydrocarbon group, R² and R³ are the same or different groups and each of R² and R³ represents a cyclohexyl group, a C₇-C₁₂ cyclohexyl derivative group or a C₈-C₂₀ alkyl group, and
in which gelling agent, the content ratio of cyclohexyl group or derivative group thereof [{(cyclohexyl group or derivative group thereof) / (cyclohexyl group or derivative group thereof + alkyl group) x 100} is 50 to 100%. However, with this grease, the thickener is short and needs improvement in the flaking.

US-A-5,607,906, US-A-5,604,187 and GB-A-2 255 346 disclose grease compositions for constant velocity joints which comprise a base oil and an urea thickener which is obtained by reacting 4,4'-diphenylmethane diisocyanate with a mixture of cyclohexylamine and aniline. These documents do not contain a specific disclosure regarding the base oil. US-B-6,432,888 discloses grease for a rolling bearing comprising a base oil containing at least a poly-α-olefin synthetic oil or a diphenyl ether synthetic oil and a diurea thickening agent which can be a reaction product between 4,4'-diphenylmethane diisocyanate and either alkyl phenylamine or cyclohexylamine.

An object of the present invention is to provide a grease composition which contains a large amount of a thickener and which prevents flaking effectively for a long period and which has an excellent inflow property, and machine elements in which the grease is filled.
Another object of the present invention is to provide a grease composition which, if used for machine elements such as constant-velocity joints, gears, rolling bearing and the like, has an improved property to easily flow into the lubrication unit and has a long fatigue life even under high temperature conditions, and machine elements in which the grease is filled.

The present invention provides the grease composition described below and machine elements using the grease composition.
1. A grease composition comprising a thickener and a base oil, characterized in that the base oil is an alkyl diphenyl ether, and the thickener contains a diurea compound represented by the Formula (I):

   (I) R¹-NHCONH-R²-NHCONH-R³,

   wherein R¹ and R³ are a phenyl group and/or a cyclohexyl group, R² is a C₆-C₁₅ divalent hydrocarbon group, and the molar ratio of cyclohexyl group/(cyclohexyl group + phenyl group) in R¹ and R³ is 0.95 to 0.10.
2. The grease composition according to the above-described item 1, which is for rolling lubrication units and/or rolling-sliding lubrication units.
3. The grease composition according to any one of the above-described items 1 and 2, which is for constant velocity joints and/or gears for automobiles.
4. The grease composition according to any one of the above-described items 1 and 2, which is for rolling bearings.
5. The grease composition according to the above-described item 4, wherein the rolling bearing is for automobile instruments or auxiliaries.
6. The grease composition according to the above-described item 1, which has a kinematic viscosity of 40 to 150 mm²/s at a temperature of 40°C.
7. A machine element in which the grease composition according to any one of the above-described items 1 to 4 is filled.
8. The machine element according to the above-described item 7, which is a constant velocity joint and/or a gear for automobiles.
9. The machine element according to the above-described item 7, which is a rolling bearing.

Because the grease composition of the present invention contains a sufficient amount of thickener and the inflow property of the grease composition into the lubrication unit is improved, the fatigue life of machine elements such as constant-velocity joint, gear and bearing is long.
The grease composition of the present invention may be generally applied to rolling bearing. Particularly, the grease composition of the present invention may suitably be used for rolling bearings for automobile instruments or auxiliaries which rolling bearings have flaking problems. Such bearings include electromagnetic clutches for automobile air conditioners; bearings used for intermediate pulley, idler pulley and tension pulley and bearings used for alternators.
Further, the grease composition of the present invention is suitably used for constant velocity joints such as fixed-type (e.g., Rzeppa-type and Barfield-type) constant-velocity joints; and slide-type (e.g., double offset type and cross groove type) constant-velocity joints.

Generally, in a rolling lubrication system or a rolling-sliding lubrication system, a flaking is associated with the service life, which needs improvement. The present invention was completed based on the finding that a grease composition which uses a specific diurea thickener may effectively prevent the direct contact between both the surfaces lubricating each other, and improves anti-flaking property without increasing the viscosity of the base oil. The grease composition of the present invention comprising a specific diurea compound as a thickener easily enters between the lubricating surfaces of rolling to prevent the direct contact of both the surfaces of the metals and to effectively prevent a flaking.

The alkyl diphenyl ether base oil used for the present invention has preferably a kinematic viscosity of 10 to 400 mm²/s, more preferably 20 to 250 mm²/s, and still more preferably 40 to 150 mm²/s at a temperature of 40 °C.

The thickener used for the grease composition of the present invention is a diurea compound represented by the above-described formula (I). R¹ and R³ are a phenyl group and/or a cyclohexyl group, and the molar ratio of cyclohexyl group/(cyclohexyl group + phenyl group) in R¹ and R³ is 0.95 to 0.10, and preferably 0.90 to 0.15.

In the formula (I), R² is a C₆-C₁₅ divalent hydrocarbon group such as a linear or branched alkylene group, a linear or branched alkenylene group, a cycloalkylene group or an aromatic group.

The diurea thickener used in the present invention may be obtained by, for example, reacting a prescribed diisocyanate and a prescribed monoamine. Preferred specific examples of the diisocyante include diphenylmethane-4,4'-diisocyanate (MDI) and tolylene diisocyanate (TDI).
As the monoamine, a mixture of aniline and cyclohexylamine is used in a prescribed ratio. A mixture of a diurea obtained from a diisocyanate and aniline, and a diurea obtained from a diisocyanate and cyclohexylamine, containing the diureas at the above-described prescribed ratio may also be used.
The content of the thickener in the grease composition of the present invention may be the amount which is appropriate for obtaining the required consistency, and the content is usually preferably 1 to 20 %, more preferably 2 to 20 % by mass based on the total mass of the grease composition.

The grease composition of the present invention may contain additives such as extreme pressure additives, antioxidants, rust preventives and anticorrosives, which are usually used for grease compositions.

### EXAMPLES

The present invention will now be described specifically by way of the following examples.
A diurea compound was prepared by reacting diphenylmethane-4,4'-diisocyanate with aniline and/or cyclohexylamine in a prescribed ratio in a base oil. Then the base oil was added to the diurea compound in an amount to attain a consistency of 300 to prepare a test grease composition.
The base oils used are the following two kinds.
Mineral oil: 500 neutral oil (kinematic viscosity at 40°C: 100 mm²/s) for comparison;
Alkyl diphenyl ether oil: MORESCO HILUBE LB100 (Matsumura Oil Research Corp.; kinematic viscosity at 40°C: 100 mm²/s) according to the invention.
The fatigue life test of the grease composition was estimated by the following rolling four ball test.

### Outline of Rolling Four Ball Test Method

Three bearing steel balls having a diameter of 15 mm are provided and placed into a cylindrical container having an inside diameter at the bottom of 36.0 mm, an inside diameter at the top end of 31.63 mm and a depth of 10.95 mm, and then 20 g of a test grease is applied. On the tops of these three steel balls, a steel ball for bearing having a diameter of 5/8 inches is contacted and when the steel ball is rotated at a prescribed rotation rate, the bottom three steel balls revolve while rotating. These steel balls are allowed to rotate continuously until a flaking occurs on the surface of the steel ball.
* A flaking occurs between balls where the contact pressure is the highest.
* The fatigue life is defined as a total rotation number at the time when a flaking occurs.

### Test Condition

Test steel ball: Φ5/8 inch steel ball for bearing (rotating ball), Φ15 mm steel ball for bearing (driven ball)
Test load (W): 400 kgf (6.5 Gpa) *
Rotation rate (n): 1500 rpm
Number of repeated tests: 5 (average life: average of five tests)
* Maximum Herzian pressure between balls. The value of 6.5 Gpa represents a very high contact pressure and a state where the oil film is considerably thin is resulted.

The compositions of the grease compositions and the test results are shown in Table 1 and Table 2. Examples 1 to 5, 6 and 10 are for comparison, not according to the invention.

**[Table 1]**

| Examples | | 1 | 2 | 3 | 4 | 5 |
|---|---|---|---|---|---|---|
| R¹, R³ molar ratio | phenyl | 100 | 90 | 50 | 15 | 0 |
| | cyclohexyl | 0 | 10 | 50 | 85 | 100 |
| amount of thickener (% by mass) | | 22 | 18 | 16 | 12 | 10 |
| base oil | | mineral oil | | | | |
| consistency | | 300 | | | | |
| fatigue life (x 1000) | | 200 | 3000 | 5500 | 4200 | 1800 |

**[Table 2]**

| Examples | | 6 | 7 | 8 | 9 | 10 |
|---|---|---|---|---|---|---|
| R¹, R³ molar ratio | phenyl | 100 | 90 | 50 | 15 | 0 |
| | cyclohexyl | 0 | 10 | 50 | 85 | 100 |
| amount of thickener (% by mass) | | 22 | 18 | 16 | 12 | 10 |
| base oil | | alkyl diphenyl ether oil | | | | |
| consistency | | 300 | | | | |
| fatigue life (x 1000) | | 350 | 4200 | 6100 | 4800 | 2200 |

With the grease compositions (Example 1 and Example 6) where 100 % of R¹ and R³ are phenyl groups in the formula (I), since the amount of the thickener was too high for the grease composition to sufficiently flow into the lubrication unit, a flaking occurred early to reach a fatigue life. On the other hand, with the grease compositions (Example 5 and Example 10) where 100 % of R¹ and R³ are cyclohexyl groups in the formula (I), since the content of diurea compound was too small, a satisfactory fatigue life was not obtained.
In contrast, with the grease compositions of Examples 2 - 4 and Examples 7 - 9 where the molar ratio of cyclohexyl group / (cyclohexyl group + phenyl group) in R¹ and R³ is 0.95 to 0.10 in the formula (I), the time for a flaking to occur was extremely long, and which is therefore effective for preventing occurrence of a flaking in CVJs, gears rolling bearings and the like.
These results show that the grease composition of the present invention is effective for preventing all the flaking events such as subsurface-initiated flaking and surface-initiated flaking.

## Claims

1. A grease composition comprising a thickener and a base oil, **characterized in that** the base oil is an alkyl diphenyl ether, and
the thickener contains a diurea compound represented by the Formula (I):
(I) R¹-NHCONH-R²-NHCONH-R³,
wherein R¹ and R³ are a phenyl group and/or a cyclohexyl group, R² is a C₆-C₁₅ divalent hydrocarbon group, and the molar ratio of cyclohexyl group/(cyclohexyl group + phenyl group) in R¹ and R³ is 0.95 to 0.10.

2. The grease composition according to claim 1, which is for rolling lubrication units and/or rolling-sliding lubrication units.

3. The grease composition according to any one of claims 1 and 2, which is for constant velocity joints and/or gears for automobiles.

4. The grease composition according to any one of claims 1 and 2, which is for rolling bearings.

5. The grease composition of claim 4, wherein the rolling bearing is for automobile instruments or auxiliaries.

6. The grease composition of claim 1, which has a kinematic viscosity of 40 to 150 mm²/s at a temperature of 40°C.

## Patentansprüche

1. Eine Schmiermittelzusammensetzung, umfassend ein Eindickmittel und ein Grundöl, **dadurch gekennzeichnet, dass** das Grundöl ein Alkyldiphenylether ist und
das Eindickmittel eine durch die Formel (I) dargestellte Diharnstoffverbindung enthält:
(I) R¹-NHCONH-R²-NHCONH-R³,
wobei R¹ und R³ ein Phenylrest und/oder ein Cyclohexylrest sind, R² ein zweiwertiger C₆-C₁₅-Kohlenwasserstoffrest ist und das Molverhältnis von Cyclohexylrest/(Cyclohexylrest + Phenylrest) in R¹ und R³ 0,95 bis 0,10 beträgt.

2. Die Schmiermittelzusammensetzung nach Anspruch 1, welche für Wälz-Schmiereinheiten und/oder Wälz-Gleit-Schmiereinheiten bestimmt ist.

3. Die Schmiermittelzusammensetzung nach einem der Ansprüche 1 und 2, welche für Gleichlaufgelenke und/oder Getriebe für Automobile bestimmt ist.

4. Die Schmiermittelzusammensetzung nach einem der Ansprüche 1 und 2, welche für Wälzlager bestimmt ist.

5. Die Schmiermittelzusammensetzung nach Anspruch 4, wobei das Wälzlager für Automobilinstrumente oder -hilfsmittel bestimmt ist.

6. Die Schmiermittelzusammensetzung nach Anspruch 1, welche eine kinematische Viskosität von 40 bis 150 mm²/s bei einer Temperatur von 40°C aufweist.

## Revendications

1. Composition de graisse comprenant un épaississant et une huile de base, **caractérisée en ce que** l'huile de base est un alkyldiphényléther, et
l'épaississant contient un composé de diurée représenté par la formule (I) :
(I) R¹-NHCONH-R²-NHCONH-R³,
où R¹ et R³ sont un groupe phényle et/ou un groupe cyclohexyle, R² est un groupe hydrocarboné divalent en C₆-C₁₅, et le rapport molaire de groupe cyclohexyle/(groupe cyclohexyle + groupe phényle) dans R¹ et R³ est de 0,95 à 0,10.

2. Composition de graisse selon la revendication 1, laquelle est destinée à des unités de lubrification de roulement et/ou à des unités de lubrification de roulement-glissement.

3. Composition de graisse selon l'une quelconque des revendications 1 et 2, laquelle est destinée à des joints à vitesse constante et/ou des 20 engrenages pour des véhicules automobiles.

4. Composition de graisse selon l'une quelconque des revendications 1 et 2, laquelle est destinée à des paliers à roulement.

5. Composition de graisse selon la revendication 4, dans laquelle le palier à roulement est destiné à des instruments ou des auxiliaires de véhicules automobiles.

6. Composition de graisse selon la revendication 1, laquelle présente une viscosité cinématique de 40 à 150 mm²/s à une température de 40°C.
